(19) Europäisches Patentamt
European Patent Office
Office européen des brevets

(11) Publication number: **0 043 564**
**B1**

(12) **EUROPEAN PATENT SPECIFICATION**

(45) Date of publication of patent specification: **11.05.83**

(51) Int. Cl.³: **A 01 N 47/12** //(A01N47/12, 43/54)

(21) Application number: **81105151.5**

(22) Date of filing: **02.07.81**

(54) **Mixtures of N,N-di-sec.butylthiocarbamate of benzyl and 3-cyclohexyl-5,6-trimethyleneuracyl useful in the weeding of beets.**

(30) Priority: **04.07.80 IT 2323180**

(43) Date of publication of application:
**13.01.82 Bulletin 82/2**

(45) Publication of the grant of the patent:
**11.05.83 Bulletin 83/19**

(84) Designated Contracting States:
**BE CH DE FR GB LI LU NL**

(56) References cited:
**R. WEGLER: "CHEMIE DER PFLANZENSCHUTZ- UND SCHÄDLINGSBEKÄMPFUNGSMITTEL", Herbizide, vol. 4, 1977, Springer Verlag, Berlin, DE**

(73) Proprietor: **Montedison S.p.A.**
**Patents & Licensing Dept. Foro Buonaparte, 31**
**P.O. Box 10528**
**I-20121 Milan (IT)**

(72) Inventor: **Lasagna, Carlo Alberto**
**34/P Viale Carducci**
**Carpi Modena (IT)**
Inventor: **Altobelli, Ottavio**
**13, Via Torricelli**
**Carpi Modena (IT)**
Inventor: **Lusetti, Cinzia**
**6, Via Garibaldi**
**Rio Saliceto Reggio Emilia (IT)**

(74) Representative: **Schmied-Kowarzik, Volker, Dr. et al,**
**Siegfriedstrasse 8**
**D-8000 München 40 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 043 564 B1

# Mixtures of N,N-di-sec.-butylthiocarbamate of benzyl and 3-cyclohexyl-5,6-trimethyleneuracyl useful in the weeding of beets

The typical beet areas are characterized by different situations as regards the flora. For example, in Central-Southern Italy the infesting population consists prevailingly of Gramineae species, while in Northern Italy the specific dicotyledon weeds are gradually replaced by Gramineae species due to the long use of active products acting predominantly on the dicotyledons.

Among such active products, LENACIL (commercial name used for 2-cyclohexyl-5,6-trimethyleneuracil) is to be mentioned, which is effective in controlling the infestations due to dicotyledons but not to Gramineae (e.g. Avena spp, Echinochloa spp, Setaria spp, Phalaris spp., etc.), and which are not broadly utilized owing to the not perfect selectivity towards the cultivations when employed in fully effective doses.

TIOCARBAZIL (commercial name proposed by Montedison to designate benzyl N,N-di-sec.butyl-thiolcarbamate has been utilized so far exclusively in underwater cultivations; attempts have been made to utilize it in dry cultivations and in particular in the beet cultivations, obtaining a complete control of the Gramineae species, but a low control of the dicotyledons (Convolvulus, Amaranthus, Solanum, etc.) and a complete selectivity towards the plant of agrarian interest.

A common practice in the modern beet-cultivation consists in intervening, during the after-sowing and pre-emergence stages, with mixtures of active products exerting a specific action against dicotyledons and Gramineae; in particular, frequent use is made of extemporaneous mixtures of Chloridazon (commercial name of 5-amino-4-chloro-2-phenyl-3-(2,4)-pyridazin-2-one)+trichloroacetic acid (TCA), which however, are endowed with an incomplete control of the infesting species and with an uncertain selectivity.

It is an object of the present invention to provide a mixture characterized by a wider action range and free from phytotoxic effects.

Another object is that of providing a mixture capable of effecting a more effective and complete weeding action than the one of the individual components in the same doses.

Still a further object is that of placing at the beet growers' disposal a mixture of active weed-killers to be used in the open field, which does not damage the plant but proves highly effective in controlling the infestations due to dicotyledons and to monocotyledons.

These and still other objects are achieved by the mixture of the present invention consisting of:—

| | |
|---|---|
| N,N-di-sec.butyl-thiolcarbamate of benzyl (Tiocarbazil) | 84—88% by weight |
| 3-cyclohexyl-5,6-trimethyleneuracil (Lenacil) | 12—16% by weight |

The above-mentioned active products may be used as such or in the form of proper compositions, such as, e.g. wettable powders, emulsions, suspensions, solutions, which are prepared by mixing, in the presence of suitable surfactants, the active products with inert powders, water, etc., according to techniques known to those skilled in the art.

It has been noticed that the action of the mixture on an individual species is higher than the one observed when employing the same amounts of the components which is specifically suited to fight such infesting species: that is to say that it is possible to observe an increase in the specific activity. For example, as results from the Table, Tiocarbazil in a dose of 4.56 kg/ha reduces by 85% the infestations due to *Avena spp.* or by 78% the infestations of *Echinochloa crus galli* (it is to be pointed out that Lenacil in a dose of 0.56 kg/ha does not prevent the growth of such plants): the mixture of 4 kg/ha of Tiocarbazil+0.56 kg/ha of Lenacil, prevents the growth of Avena spp. by 95%.

In the practical application it has been noticed that the effective doses of mixture (as such or calculated on the amounts of active products existing in a composition) vary from 3 to 5 kg/ha. Higher doses may result in damages to the beets due to the presence of excessive amounts of Lenacil, which in an amount of 1 kg/ha already exhibits an undesirable phytotoxicity on such Polygonaceae; lower doses are not capable of efficaciously fighting all the infesting species taken into consideration.

In the following Table (drawn up on the basis of the data determined according to the modalities described in the example), the amounts capable of reducing the infestation of the species taken into consideration are calculated in percentage in comparison with untreated cultivations.

For comparative purposes also the data determined in the weeding of beet cultivations effected by using extemporaneous mixtures of T.C.A. (trichloroacetic acid) and Chloridazon (5-amino-4-chloro-2-phenyl-3-(2,4)-pyridazin-2-one) are recorded.

TABLE

Reduction in % of the infestation in respect of the check (=0)

| Infesting species | Tiocarbazil dose: kg/ha a.p. 3 | Tiocarbazil dose: kg/ha a.p. 4 | Tiocarbazil dose: kg/ha a.p. 4.56 | Lenacil* dose: kg/ha a.p. 0.56 |
|---|---|---|---|---|
| Veronica spp. | 70 | 80 | 83 | 25 |
| Papaver rhoeas | 30 | 40 | 50 | 80 |
| Solanum nigrum | 30 | 40 | 50 | 80 |
| Amaranthus retroflexus | 35 | 45 | 52 | 60 |
| Stachys annua | 10 | 20 | 40 | 65 |
| Linaria spp. | 60 | 85 | 90 | 60 |
| Polygonum convolvulus | 12 | 20 | 40 | 85 |
| Stellaria media | 38 | 50 | 60 | 90 |
| Plantago major | 89 | 100 | 100 | 80 |
| Polygonum aviculare | 8 | 20 | 45 | 65 |
| Sinapis arvensis | 0 | 5 | 20 | 85 |
| Chenopodium spp. | 55 | 70 | 75 | 65 |
| Anagallis arvensis | 22 | 35 | 40 | 80 |
| Euphorbia spp. | 18 | 30 | 40 | 50 |
| Bifora radians | 13 | 25 | 40 | 80 |
| Alopecurus myosuroides | 85 | 90 | 95 | 80 |
| Poa annua | 86 | 94 | 98 | 90 |
| Echinocloa crus-galli | 75 | 78 | 78 | 0 |
| Avena spp. | 75 | 80 | 85 | 0 |

*Lenacil in a dose of 4.56 kg/ha has proved highly phytotoxic for the beets

TABLE (continuation)

Reduction in % of the infestation in respect of the check (=0)

| Infesting species | Mixture of Tiocarbazil Lenacil+ dose: kg/ha a.p. 3+0.56 | Mixture of Tiocarbazil Lenacil+ dose: kg/ha a.p. 4+0.56 | Mixture of TCA+Chloridazon dose: kg/ha 10+2.8 |
|---|---|---|---|
| Veronica spp. | 92 | 95 | 95 |
| Papaver rhoeas | 90 | 95 | 95 |
| Solanum nigrum | 85 | 90 | 90 |
| Amaranthus retroflexus | 80 | 90 | 85 |
| Stachys annua | 93 | 100 | 95 |
| Linaria spp. | 90 | 100 | 100 |
| Polygonum convolvulus | 89 | 98 | 85 |
| Stellaria media | 96 | 100 | 75 |
| Plantago major | 100 | 100 | 90 |
| Polygonum aviculare | 80 | 97 | 75 |
| Sinapis arvensis | 100 | 100 | 80 |
| Chenopodium spp. | 100 | 100 | 90 |
| Anagallis arvensis | 95 | 100 | 50 |
| Euphorbia spp. | 80 | 90 | 90 |
| Bifora radians | 82 | 85 | 25 |
| Alopecurus myosuroides | 95 | 100 | 95 |
| Poa annua | 91 | 100 | 95 |
| Echinocloa crus-galli | 85 | 85 | 70 |
| Avena spp. | 84 | 95 | 85 |

With a view to better illustrating the present invention the following example is given.

Example

The tests were carried out in lots of 25 $m^2$ of beet-cultivated earth.

The products were distributed at the after-sowing and pre-emergence stages in the doses indicated in the Table, in the form of dispersion in 1,000 l/ha of $H_2O$.

Such dispersions contained, together with the active principles, a suitable amount of a surfactant like sodium lauryl sulfonate (from 1 to 5 g of surfactant per 100 g of active principles).

The final determination of the results was effected on the average 80 days after the treatment by extirpating, classifying and counting the weeds existing in an area of 2 $m^2$ per lot; the results are recorded on the enclosed Table as reduction, obtained in respect of the check (not treated), in the number of the infesting species still present.

The selectivity towards the beet was determined at sight after a careful examination of the vegetation.

**Claims**

1. A mixture of herbicides useful for controlling weeds in beet cultivations consisting of:

| | |
|---|---|
| benzyl N,N-di-sec.butyl-thiolcarbamate | 84—88% by wgt. |
| 3-cyclohexyl-5,6-trimethyleneuracil | 12—16% by wgt. |

2. A mixture of herbicides according to claim 1, consisting of:

| | |
|---|---|
| benzyl N,N-di-sec.-butyl-thiolcarbamate | 87.7% by weight |
| 3-cyclohexyl-5,6-trimethyleneuracyl | 12.3% by weight |

3. Compositions for controlling weeds in beet cultivations containing the mixtures according to claim 1, together with inert ingredients, surfactants, fillers, or dispersants.

4. A method of controlling weeds in beet cultivations, consisting in treating them with mixtures according to claim 1, in amounts of from 3 to 5 kg/ha.

**Patentansprüche**

1. Eine zur Unkrautbekämpfung in Rübenkulturen geeignete Mischung aus Herbiziden, bestehend aus

| | |
|---|---|
| Benzyl-N,N-di-sek.-butyl-thiolcarbamat | 84 bis 88 Gew.-% |
| 3-Cyclohexyl-5,6-trimethylenuracil | 12 bis 16 Gew.-% |

2. Mischung aus Herbiziden gemäß Anspruch 1, bestehend aus:

| | |
|---|---|
| Benzyl-N,N-di-sek.-butyl-thiolcarbamat | 87,7 Gew.-% |
| 3-Cyclohexyl-5,6-trimethylenuracil | 12,3 Gew.-% |

3. Zusammensetzungen zur Unkrautbekämpfung in Rübenkulturen, enthaltend die Mischungen gemäß Anspruch 1, zusammen mit inerten Bestandteilen, oberflächenaktiven Mitteln, Füllern oder Dispersionsmitteln.

4. Verfahren zur Unkrautbekämpfung in Rübenkulturen, bestehend aus der Behandlung derselben mit Mischungen gemäß Anspruch 1 in Mengen von 3 bis 5 kg/ha.

**Revendications**

1. Un mélange d'herbicides utile pour contrôler les mauvaises herbes dans les cultures betteravières consistant en:

| | |
|---|---|
| benzyl N,N-di-sec.butyl-thiolcarbamate | 84—88% en poids |
| 3-cyclohexyl-5,6-trimethyleneuracil | 12—16% en poids |

2. Un mélange d'herbicides selon la revendication consistant en:

| | |
|---|---|
| benzyl N,N-di-sec.butyl-thiolcarbamate | 87.7% en poids |
| 3-cyclohexyl-5,6-trimethyleneuracyl | 12.3% en poids |

3. Compositions pour lutter contre les mauvaises herbes dans les cultures betteravières contenant un mélange selon la revendication 1, associé à des ingrédients inertes, agents tensio-actifs, chargés ou dispersants.

4. Méthode pour lutter contre les mauvaises herbes dans les cultures betteravières consistant à les traiter à l'aide de mélange selon la revendication 1, en quantité de l'ordre de 3 à 5 kg/ha.